# EUROPEAN PATENT SPECIFICATION

(11) **EP 3 643 941 B1**
(45) Date of publication and mention of the grant of the patent: **23.08.2023**
(21) Application number: 19204022.8
(22) Date of filing: 18.10.2019
(51) Int. Cl.: F16D 48/02, F15B 11/16

(54) **HYDRAULIC CLUTCH ACTUATOR**
HYDRAULISCHER KUPPLUNGSAKTUATOR
ACTIONNEUR D'EMBRAYAGE HYDRAULIQUE

(30) Priority: 24.10.2018 DE 102018126549
(43) Date of publication of application: 29.04.2020
(73) Proprietor: FTE automotive GmbH, 96106 Ebern (DE)
(72) Inventor: HEUBNER, Wilhelm, D-96106 Ebern (DE)
(74) Representative: Valeo Powertrain Systems

(56) References cited:
- WO-A1-2006/128637
- DE-A1-102011 105 648
- DE-A1-102015 214 998
- DE-A1-102016 220 964

## Description

The invention relates to a hydraulic clutch actuator which is suitable in particular for switching clutches of a dual-clutch gear mechanism.

Such a clutch actuator has a hydraulic pump which can in particular be driven electrically. The hydraulic pump has two pressure outlets, which are connected to a first and a second pressure connection of the clutch actuator and which can provide the pressure connections with a hydraulic fluid pressure and flow. Using the hydraulic fluid pressure and flow, two pressure pistons can be steplessly adjusted between a non-actuated and an actuated position. The pressure pistons serve to actuate friction clutches, which are part of the dual-clutch gear mechanism.

In order to be able to control or regulate the pressure at the pressure connections, a proportional valve is arranged between each pressure outlet and the associated pressure connection.

The hydraulic pump may advantageously be constructed as a roller cell pump or vane cell pump.

If a dual-clutch gear mechanism whose clutches are switched with such a clutch actuator is intended to be used in a hybrid vehicle, there is used an additional clutch, by means of which the dual-clutch gear mechanism can be coupled to an internal combustion engine or uncoupled therefrom.

DE 10 2011 105 648 A1 discloses a clutch actuator which in order to activate this additional clutch has a third pressure outlet on the hydraulic pump and accordingly a third pressure connection which is fed by the third pressure outlet of the hydraulic pump.

Document DE 10 2015 214 998 A1 relates to an hydraulic clutch actuator, the pump has only two outlets, wherein each outlet is connected to a further device to which pressurized fluid is supplied.

Document DE 10 2016 220 964 A1 relates to an hydraulic clutch actuator, wherein the pump has only two outlets, both outlets may be connected to further two devices to which pressurized fluid is supplied.

For technical reasons, however, it is not simple to provide three pressure outlets on the hydraulic pump instead of two pressure outlets. With a vane cell pump or with a roller cell pump, the space available in a peripheral direction for drawing in and discharging the hydraulic fluid is thereby significantly decreased; in place of nominally 180°, there is only 120° still available. If it is further taken into account that the next suction region cannot begin directly after the previous discharge region of the hydraulic pump, a third pressure outlet reduces the angular range actually available for conveying by more than 1/3.

An object of the invention is to provide a clutch actuator by means of which an additional clutch can be actuated on a dual-clutch gear mechanism without the efficiency and the simple structure of the hydraulic pump used thereby being affected.

In order to achieve this objective, there is provided according to the invention a hydraulic clutch actuator according to claim 1. The invention is based on the recognition that the additional clutch generally does not have to be switched at the same time as the two clutches of the dual-clutch gear mechanism, but instead separately. Therefore, if a hydraulic pressure is required to actuate the clutch which is associated with the internal combustion engine of the hybrid drive, the hydraulic flow which is otherwise used to actuate the one clutch of the dual-clutch gear mechanism can be used. Since the hydraulic pump has no additional pressure outlets beyond the first and second pressure outlet, the efficiency thereof is not impaired.

According to the invention, a first proportional valve is arranged between the first pressure outlet of the hydraulic pump and the first pressure connection and a second proportional valve is arranged between the second pressure outlet of the hydraulic pump and the second pressure connection. The proportional valves enable the outlet pressure at the pressure outlets of the coupling actuator to be controlled precisely or to be regulated in combination with a pressure sensor.

The third pressure connection is, according to the invention, connected upstream of the second proportional valve to the second pressure outlet, that is to say, between the second pressure outlet of the hydraulic pump and the second proportional valve. This ensures that the pressure available for the third pressure connection is independent of the pressure which is applied at the second pressure connection.

In order to be able to control or regulate the third pressure connection independently of the second pressure connection, a shut-off valve is preferably arranged between the second pressure outlet and the second proportional valve.

According to the invention, a shut-off valve is arranged between the second pressure outlet and the third proportional valve.

So that, even in the event of a stoppage of the hydraulic pump, the pressure at the corresponding pressure connections can be maintained, a non-return valve may be arranged between the shut-off valve and the proportional valve. A non-return valve is preferably also arranged between the first pressure outlet and the first proportional valve.

According to another embodiment, there is provision for a fourth pressure connection to be connected to the second pressure outlet of the hydraulic pump, wherein the fourth pressure connection is connected upstream of the shut-off valves, which are arranged between the second pressure outlet and the second pressure connection and the third pressure connection. With the fourth pressure connection, another clutch or switching function which is independent of the actuation of the two clutches of the dual-clutch gear mechanism can be implemented.

Preferably, there is integrated in the coupling actuator a common storage container, from which the hydraulic pump draws and to which the returns of the proportional valves lead. A compact unit which manages without hose connections to an external storage container is thereby obtained.

The hydraulic pump may in particular be a roller cell pump or a vane cell pump which are compact and which are distinguished by a high level of efficiency.

The invention is described below with reference to two embodiments, which are illustrated in the appended drawings. In the drawings:
Figure 1 is a perspective view of a hydraulic clutch actuator according to the invention;
Figure 2 is a circuit diagram of a hydraulic clutch actuator according to a first embodiment of the invention; and
Figure 3 is a circuit diagram of a hydraulic clutch actuator according to a second embodiment of the invention.

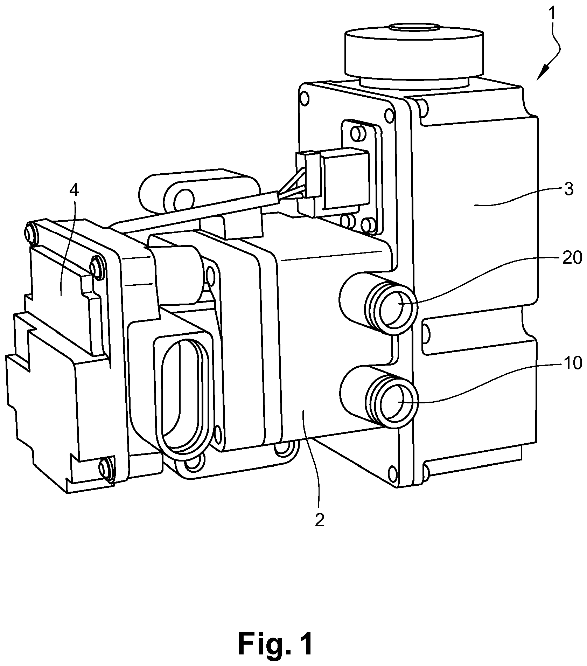

Figure 1 schematically shows a hydraulic clutch actuator 1 which has a hydraulic pump 2, a storage container 3 which is fitted thereto for hydraulic fluid and an electronic housing 4.

At one side of the hydraulic pump 2, a first pressure connection 10 and a second pressure connection 20 are arranged.

There can be connected to the pressure connections 10, 20 hydraulic lines which lead to two pressure pistons which are part of a dual-clutch gear mechanism and which are used to actuate the two friction clutches of the dual-clutch gear mechanism.

At the rear side of the hydraulic pump 2 which cannot be seen in Figure 1, there is provided a third pressure connection which is designated 30 below. The pressure connection 30 may be coupled to a pressure piston of another clutch. This clutch is used in a hybrid vehicle to connect an electric motor to the drive train, in which there is also arranged the dual-clutch gear mechanism whose clutches are actuated by means of the two pressure connections 10, 20.

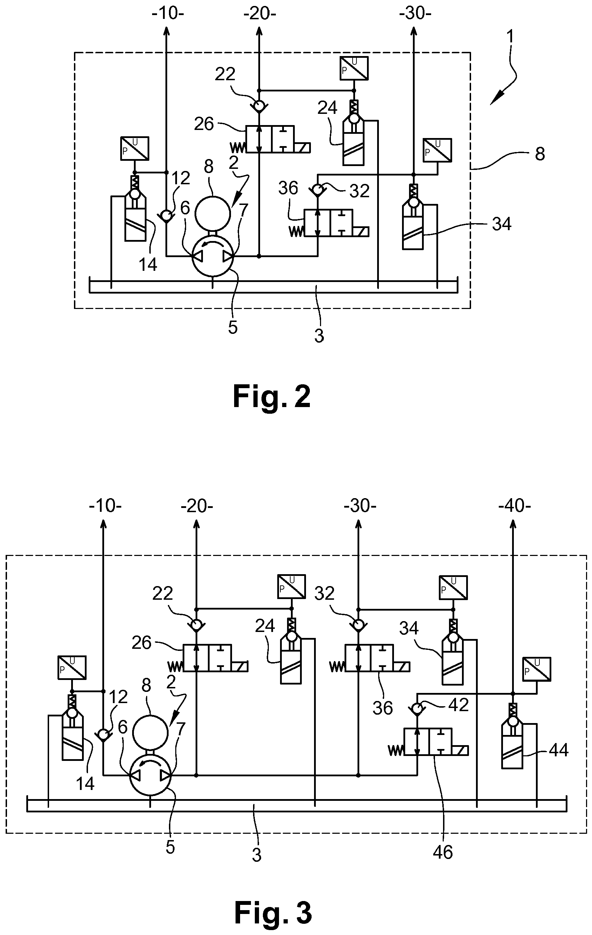

In Figure 2, the hydraulic circuit diagram of the hydraulic clutch actuator 1 of Figure 1 is shown.

The hydraulic pump 2 has a pump body 5 which has a first pressure outlet 6 and a second pressure outlet 7.

An electric motor 8 is provided as a drive for the pump.

The hydraulic pump 2 is preferably a vane cell pump or a roller cell pump. It is constructed symmetrically with respect to the two pressure outlets 6, 7 so that the two pressure outlets 6, 7 are supplied with the same conveying pressure and the same conveying volume.

In place of a vane cell pump or a roller cell pump, however, other types of hydraulic pumps are in principle suitable.

The pressure outlet 6 is used to supply the pressure connection 10 of the clutch actuator 1. Downstream of the pressure outlet 6, a non-return valve 12 is arranged and a proportional valve 14 is again arranged downstream of the non-return valve 12. The pressure at the pressure connection 10 can be controlled with the proportional valve 14. If the conveying pressure of the hydraulic pump 2 at the pressure outlet 6 is above a predetermined value, the excess hydraulic fluid is supplied directly back to the storage container 3.

Together with pressure sensors, which are not shown here, a control of the fluid pressure in the circuit of the first pressure connection 10 is achieved.

The second pressure connection 20 which is connected to the second pressure outlet 7 has inside the clutch actuator the same components as the first circuit between the first pressure outlet 6 and the first pressure connection 10, that is to say, a non-return valve 22 and a proportional valve 24. In addition, a pressure sensor may be provided.

The third pressure connection 30 is connected to the second pressure outlet 7 of the hydraulic pump 2. In other words, the hydraulic fluid for the third pressure connection 30 is branched off from the circuit which feeds the second pressure connection 20. According to the invention, the circuit for the third pressure connection 30 branches off upstream of all the components which are provided in the circuit for the second pressure connection 20.

A non-return valve 32 and a proportional valve 34 are also arranged in the circuit of the third pressure connection 30.

So that the pressure at the second pressure connection 20 can be controlled independently of the pressure at the third pressure connection 30, a shut-off valve 26 or 36 is arranged in each of the two circuits.

In a normal switching operation of the two friction clutches of the dual-clutch gear mechanism, the shut-off valve 26 is in the position shown in Figure 2, whilst the shut-off valve 36 is switched in such a manner that the supply of the pressure connection 30 is interrupted. By controlling the proportional valves 14, 24 in an appropriate manner, in principle in a manner known per se, one of the two friction clutches can be opened in a sliding manner whilst the other of the two friction clutches is closed in a sliding manner so that the drive torque is transmitted smoothly from one gear to the next. During this operation, the pressure of the circuit of the third pressure connection 30 remains either at the last value adjusted, or the pressure can be reduced by the proportional valve 34 being controlled.

When the clutch which is connected to the third pressure connection 30 is intended to be switched, the shut-off valve 26 is actuated so that the circuit of the second pressure connection 20 is shut off. At the same time, the shut-off valve 36 is moved into the position which is shown in Figure 2 and in which the circuit of the third pressure connection 30 is supplied by the pressure outlet 7 of the hydraulic pump 2. The clutch can then be supplied with pressure and switched in the desired manner.

The first, the second and the third circuit have in common that a pressure which has been applied once can in principle be maintained as long as the proportional valve is controlled accordingly. This is a result, on the one hand, of the fact that the non-return valves 12, 22, 32 are leak-free and, on the other hand, that the proportional valves 14, 24, 34 are also leak-free.

The pressure at the pressure connection 10 may at any time be controlled completely independently of the pressure at the pressure connections 20, 30. However, the pressure connections 20, 30 cannot be controlled independently of each other since the lower of the two pressures determines the maximum pressure for the other circuit. In practice, however, this is no problem since during switching the two pressure connections 10, 20 are used at the same time, whereas the pressure connection 30 is generally only actuated when the pressure connection 20 does not have to be regulated.

The fact that the two pressure connections 20, 30 are not independent of each other is also not a problem when the actuation pressure of a closed clutch which is connected to one of the pressure connections 10, 20, 30 is readjusted during operation in accordance with the drive torque applied in each case.

In Figure 3, a second embodiment is shown. For the components known from the first embodiment, the same reference numerals are used and reference is made in this regard to the above explanations.

The difference between the first and the second embodiment is that, in the second embodiment, there is provided a fourth pressure connection 40 which is connected in a similar manner to the third pressure connection 30 to the second pressure outlet 7 of the hydraulic pump 2.

The circuit of the fourth pressure connection 40 contains in the same manner as the other circuits a non-return valve 42, a proportional valve 44 and a shut-off valve 46.

In the second embodiment, the first pressure connection 10 and the second pressure connection 20 can further be used to actuate the two friction clutches of a dual-clutch gear mechanism in opposite directions. The fourth pressure connection is used to actuate another clutch which can be actuated independently of the clutches which are connected to the pressure connections 20 and 30.

## Claims

1. Hydraulic clutch actuator having a hydraulic pump (2) which has a first and a second pressure outlet (6, 7), a first pressure connection (10) which is supplied by the first pressure outlet (6) of the hydraulic pump (2) defining a circuit of the first pressure connection (10), a first proportional valve (14) is arranged in the circuit of the first pressure connection (10) between the first pressure outlet (6) of the hydraulic pump (2) and the first pressure connection (10), a second pressure connection (20) which is supplied by the second pressure outlet (7) of the hydraulic pump (2) defining a circuit of the second pressure connection (20), a second proportional valve (24) is arranged in the circuit of the second pressure connection (20) between the second pressure outlet (7) of the hydraulic pump (2) and the second pressure connection (20), **characterized in that** a third pressure connection (30) is connected to the second pressure outlet (7) of the hydraulic pump (2) defining a circuit of the third pressure connection (30), a third proportional valve (34) is arranged in the circuit of the third pressure connection (30) between the second pressure outlet (7) of the hydraulic pump (2) and the third pressure connection (30), the circuit of the third pressure connection (30) is connected upstream of the second proportional valve (24) of the circuit of the second pressure connection (20) to the second pressure outlet (7) and **in that** a shut-off valve (36) is arranged in the circuit of the third pressure connection (30) between the second pressure outlet (7) and the third proportional valve (34).

2. Hydraulic clutch actuator according to claim 1, **characterized in that** a shut-off valve (26) is arranged in the circuit of the second pressure connection (20) between the second pressure outlet (7) and the second proportional valve (24).

3. Hydraulic clutch actuator according to claim 2, **characterized in that** a non-return valve (22, 32) is arranged between the shut-off valve (26, 36) and the proportional valve (24, 34).

4. Hydraulic clutch actuator according to any one of the preceding claims, **characterized in that** a non-return valve (12) is arranged between the first pressure outlet (6) and the first proportional valve (14).

5. Hydraulic clutch actuator according to any one of claim 2 to 4, **characterized in that** a fourth pressure connection (40) is connected to the second pressure outlet (7) of the hydraulic pump (2), wherein the fourth pressure connection (40) is connected upstream of the shut-off valves (26, 36), which are arranged between the second pressure outlet (7) and the second pressure connection (20) and the third pressure connection (30).

6. Hydraulic clutch actuator according to any one of the preceding claims, **characterized in that** a common storage container (3) from which the hydraulic pump (2) draws and to which the returns of the proportional valves (14, 24, 34, 44) lead is integrated.

7. Hydraulic clutch actuator according to any one of the preceding claims, **characterized in that** the hydraulic pump (2) is a roller cell pump or a vane cell pump.

## Patentansprüche

1. Hydraulikkupplungsbetätigungsanordnung, aufweisend eine Hydraulikpumpe (2), die einen ersten und einen zweiten Druckauslass (6, 7) aufweist, einen ersten Druckanschluss (10), der durch den ersten Druckauslass (6) der Hydraulikpumpe (2) gespeist wird, der einen Kreis des ersten Druckanschlusses (10) definiert, wobei ein erstes Proportionalventil (14) in dem Kreis des ersten Druckanschlusses (10) zwischen dem ersten Druckauslass (6) der Hydraulikpumpe (2) und dem ersten Druckanschluss (10) angeordnet ist, einen zweiten Druckanschluss (20), der durch den zweiten Druckauslass (7) der Hydraulikpumpe (2) gespeist wird, der einen Kreis des zweiten Druckanschlusses (20) definiert, wobei ein zweites Proportionalventil (24) in dem Kreis des zweiten Druckanschlusses (20) zwischen dem zweiten Druckauslass (7) der Hydraulikpumpe (2) und dem zweiten Druckanschluss (20) angeordnet ist, **dadurch gekennzeichnet, dass** ein dritter Druckanschluss (30) an den zweiten Druckauslass (7) der Hydraulikpumpe (2) angeschlossen ist, der einen Kreis des dritten Druckanschlusses (30) definiert, wobei ein drittes Proportionalventil (34) in dem Kreis des dritten Druckanschlusses (30) zwischen dem zweiten Druckauslass (7) der Hydraulikpumpe (2) und dem dritten Druckanschluss (30) angeordnet ist, wobei der Kreis des dritten Druckanschlusses (30) stromaufwärts des zweiten Proportionalventils (24) des Kreises des zweiten Druckanschlusses (20) an den zweiten Druckauslass (7) angeschlossen ist, und dadurch, dass ein Absperrventil (36) in dem Kreis des dritten Druckanschlusses (30) zwischen dem zweiten Druckauslass (7) und dem dritten Proportionalventil (34) angeordnet ist.

2. Hydraulikkupplungsbetätigungsanordnung nach Anspruch 1, **dadurch gekennzeichnet, dass** ein Absperrventil (26) in dem Kreis des dritten Druckanschlusses (20) zwischen dem zweiten Druckauslass (7) und dem zweiten Proportionalventil (24) angeordnet ist.

3. Hydraulikkupplungsbetätigungsanordnung nach Anspruch 2, **dadurch gekennzeichnet, dass** ein Rückschlagventil (22, 32) zwischen dem Absperrventil (26, 36) und dem Proportionalventil (24, 34) angeordnet ist.

4. Hydraulikkupplungsbetätigungsanordnung nach einem der vorhergehenden Ansprüche, **dadurch gekennzeichnet, dass** ein Rückschlagventil (12) zwischen dem ersten Druckauslass (6) und dem ersten Proportionalventil (14) angeordnet ist.

5. Hydraulikkupplungsbetätigungsanordnung nach einem der Ansprüche 2 bis 4, **dadurch gekennzeichnet, dass** ein vierter Druckanschluss (40) an den zweiten Druckauslass (7) der Hydraulikpumpe (2) angeschlossen ist, wobei der vierte Druckanschluss (40) stromaufwärts der Rückschlagventile (26, 36) angeschlossen ist, die zwischen dem zweiten Druckauslass (7) und dem zweiten Druckanschluss (20) und dem dritten Druckanschluss (30) angeordnet sind.

6. Hydraulikkupplungsbetätigungsanordnung nach einem der vorhergehenden Ansprüche, **dadurch gekennzeichnet, dass** ein gemeinsamer Speicherbehälter (3), aus dem die Hydraulikpumpe (2) zieht und in den die Rückläufe der Proportionalventile (14, 24, 34, 44) führen, integriert ist.

7. Hydraulikkupplungsbetätigungsanordnung nach einem der vorhergehenden Ansprüche, **dadurch gekennzeichnet, dass** die Hydraulikpumpe (2) eine Rollenzellenpumpe oder eine Flügelzellenpumpe ist.

## Revendications

1. Actionneur d'embrayage hydraulique ayant une pompe hydraulique (2) qui a une première et une deuxième sortie de pression (6, 7), un premier raccord de pression (10) qui est alimenté par la première sortie de pression (6) de la pompe hydraulique (2) définissant un circuit du premier raccord de pression (10), une première soupape proportionnelle (14) est agencée dans le circuit du premier raccord de pression (10) entre la première sortie de pression (6) de la pompe hydraulique (2) et le premier raccord de pression (10), un deuxième raccord de pression (20) qui est alimenté par la deuxième sortie de pression (7) de la pompe hydraulique (2) définissant un circuit du deuxième raccord de pression (20), une deuxième soupape proportionnelle (24) est agencée dans le circuit du deuxième raccord de pression (20) entre la deuxième sortie de pression (7) de la pompe hydraulique (2) et le deuxième raccord de pression (20), **caractérisé en ce qu'**un troisième raccord de pression (30) est raccordé à la deuxième sortie de pression (7) de la pompe hydraulique (2) définissant un circuit du troisième raccord de pression (30), une troisième soupape proportionnelle (34) est agencée dans le circuit du troisième raccord de pression (30) entre la deuxième sortie de pression (7) de la pompe hydraulique (2) et le troisième raccord de pression (30), le circuit du troisième raccord de pression (30) est raccordé en amont de la deuxième soupape proportionnelle (24) du circuit du deuxième raccord de pression (20) à la deuxième sortie de pression (7) et **en ce qu'**une soupape d'arrêt (36) est agencée dans le circuit du troisième raccord de pression (30) entre la deuxième sortie de pression (7) et la troisième soupape proportionnelle (34).

2. Actionneur d'embrayage hydraulique selon la revendication 1, **caractérisé en ce qu'**une soupape d'arrêt (26) est agencée dans le circuit du deuxième raccord de pression (20) entre la deuxième sortie de pression (7) et la deuxième soupape proportionnelle (24) .

3. Actionneur d'embrayage hydraulique selon la revendication 2, **caractérisé en ce qu'**un clapet anti-retour (22, 32) est agencé entre la soupape d'arrêt (26, 36) et la soupape proportionnelle (24, 34).

4. Actionneur d'embrayage hydraulique selon l'une quelconque des revendications précédentes, **caractérisé en ce qu'**un clapet anti-retour (12) est agencé entre la première sortie de pression (6) et la première soupape proportionnelle (14).

5. Actionneur d'embrayage hydraulique selon l'une quelconque des revendications 2 à 4, **caractérisé en ce qu'**un quatrième raccord de pression (40) est raccordé à la deuxième sortie de pression (7) de la pompe hydraulique (2), le quatrième raccord de pression (40) étant raccordé en amont des soupapes d'arrêt (26, 36), qui sont agencées entre la deuxième sortie de pression (7) et le deuxième raccord de pression (20) et le troisième raccord de pression (30).

6. Actionneur d'embrayage hydraulique selon l'une quelconque des revendications précédentes, **caractérisé en ce qu'**un contenant de stockage commun (3) duquel la pompe hydraulique (2) tire, et auquel les retours des soupapes proportionnelles (14, 24, 34, 44) mènent, est intégré.

7. Actionneur d'embrayage hydraulique selon l'une quelconque des revendications précédentes, **caractérisé en ce que** la pompe hydraulique (2) est une pompe cellulaire à rouleaux ou une pompe cellulaire à palettes.
